# EUROPEAN PATENT SPECIFICATION

(11) **EP 3 025 925 B1**
(45) Date of publication and mention of the grant of the patent: **13.04.2022**
(21) Application number: 15189656.0
(22) Date of filing: 13.10.2015
(51) Int. Cl.: B61F 15/20

(54) **SENSORIZED AXLEBOX-BEARING UNIT FOR SUPPORTING A RAILWAY AXLE AND ASSOCIATED SENSOR UNITS**
MIT EINEM SENSOR AUSGESTATTETER RADSATZLAGER, DAFÜR GEEIGNETER SENSOR
BOÎTE D'ESSIEU FERROVIAIRE MUNIE D'UN CAPTEUR ET CAPTEURS CORRESPONDANTS

(30) Priority: 28.11.2014 IT TO20140992
(43) Date of publication of application: 01.06.2016
(73) Proprietor: Aktiebolaget SKF, 415 50 Göteborg (SE)
(72) Inventor: ROSSI, Mario, 10098 Rivoli (TO) (IT); SEMA, Silvano, 10060 Cercenasco (TO) (IT)
(74) Representative: Tedeschini, Luca

(56) References cited:
- EP-A2- 1 398 636
- WO-A1-00/51869
- WO-A1-2007/065413
- KR-A- 20130 123 130

## Description

### Technical Field of the Invention

The present invention relates to a sensorized axlebox-bearing unit for supporting a railway axle.

### Known Art

As known, for example from US3741614, a railway vehicle is supported by a number of axles on which the wheels are keyed; each end of the axle is supported in a rotatable manner by a axlebox-bearing unit comprising an axle box secured by means of appropriate suspensions to the railway carriage, and a rolling bearing; an inner ring of the rolling bearing is integrally mounted at one end of reduced diameter of the axle, known as spindle, for rotation therewith, while an outer ring of the rolling bearing is press-fitted into a housing element of the axle box, generally annular and stationary in use, which supports, towards the outside of the axle box, also a sealing gasket to protect the rolling bearing. As shown in WO2007/065413, on the sealing gasket a sensor module is fastened, which is part of one piece sensor unit designed to allow the insertion of the sensor module inside the housing element from the outside towards the inside through a radial hole obtained on a lateral wall of the housing element, radial hole which in use is closed by a flange section of the sensor unit, which is integrally fastened to the housing element on the outside of the same.

The solution described has, once mounted, high overall dimensions, in particular on the outside of the housing element of the axle box. Furthermore, a data transmission electric cable which is part of the sensor unit and connects the sensor module with a connection piece for transmitting data to an electronic processing unit in use may become tangled or otherwise interfere with the spindle or other movable elements of the unit. Finally, the solution described is inconvenient to implement.

### Summary of the Invention

The object of the present invention is to provide a sensorized axlebox-bearing unit for supporting a railway axle devoid of the drawbacks mentioned above and which in particular would avoid any possible interference between data transmission electric cable of the sensor unit and movable elements of the axlebox-bearing unit. It is also an object of the invention to provide a sensor unit efficient, easy to install and of reduced overall dimensions.

According to the invention, therefore, a sensorized axlebox-bearing unit for supporting a railway axle and a sensor usable in said axlebox-bearing unit and made as a sensor unit are provided, having the characteristics set forth in the appended claims.

### Brief Description of the Drawings

The invention will now be described with reference to the accompanying drawings, which illustrate different examples of non-limiting embodiments thereof, wherein:
- Figure 1 diagrammatically illustrates a three-quarter lateral perspective view of an axlebox-bearing unit for a railway axle sensorized according to the invention;
- Figure 2 illustrates a perspective view in enlarged scale of a detail of Figure 1;
- Figure 3 diagrammatically illustrates an exploded perspective view of main components of the sensorized axlebox-bearing unit of Figure 1;
- Figure 4 illustrates in enlarged scale a sectional view of the components of Figure 3 according to a plane indicated by IV-IV in an exploded configuration and made according to a possible alternative embodiment of the invention;
- Figure 5 illustrates in further enlarged scale a sectional view, as in Figure 4, of the components of Figure 4, but in an assembled configuration;
- Figure 6 illustrates diagrammatically a partially exploded perspective view of main components of a sensorized axlebox-bearing unit made according to a possible alternative embodiment with respect to the axlebox-bearing unit of Figure 1; and

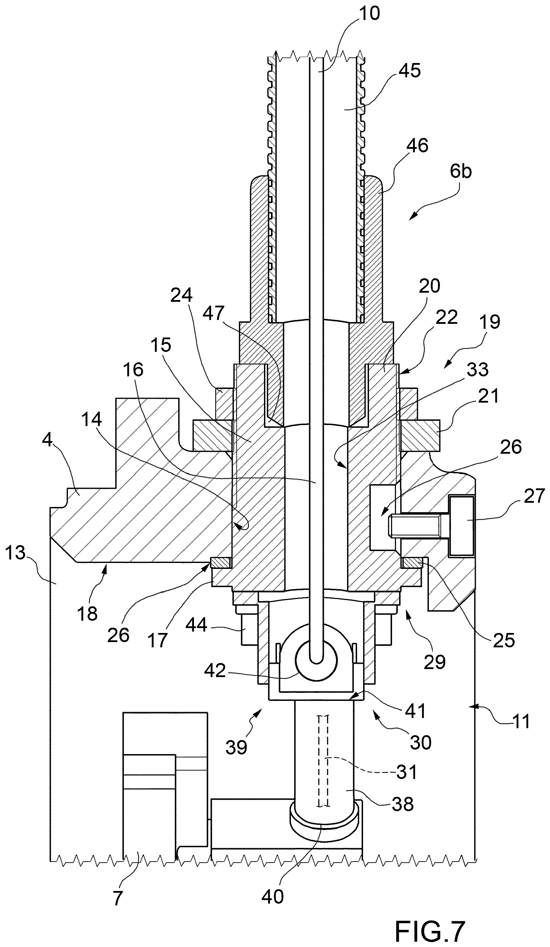

- Figure 7 diagrammatically illustrates a sectional view of the components of Figure 6 according to a plane indicated by VII-VII in an assembled configuration.

### Detailed Description

With reference to Figures from 1 to 3, reference number 1 denotes as a whole, a sensorized axlebox-bearing unit for supporting an axle 2 of a railway vehicle of known type and therefore not illustrated in detail for simplicity.

The unit 1 comprises a railway axle box 3 adapted to rotatably receive in the inside thereof an end of reduced diameter or spindle of the axle 2 by means of a rolling bearing 100, known and illustrated only partially in dashed lines for simplicity, in turn comprising an inner ring mountable on the spindle, and an outer ring integrally borne by a housing element 4 of the axle box 3, stationary in use, which supports a sealing gasket 5 towards the outside of the axle box 3 and also around the axle 2 to protect the rolling bearing.

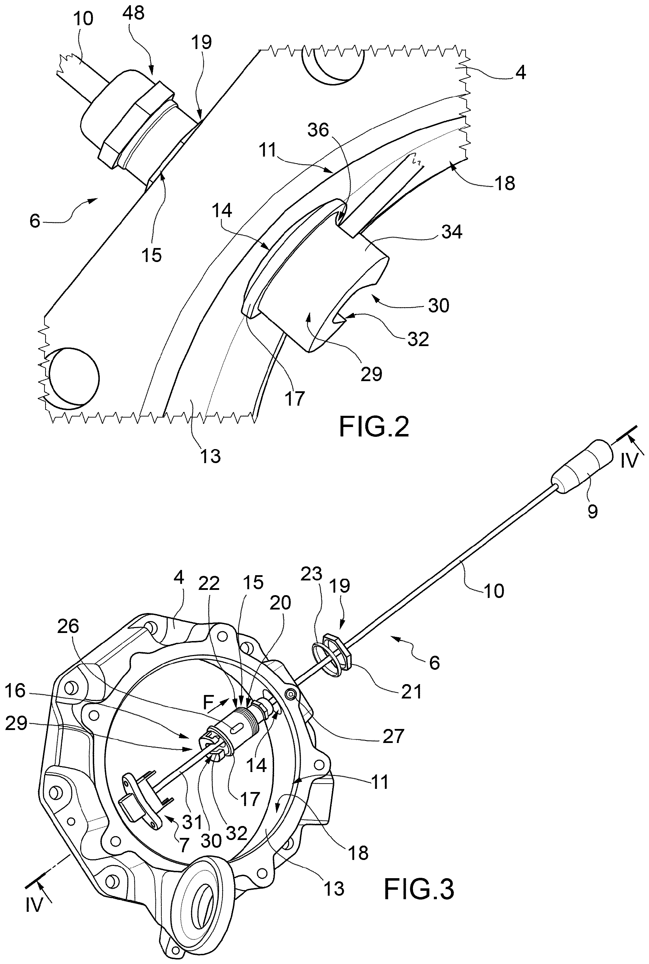

The axlebox-bearing unit 1 also comprises a sensor unit 6 in turn comprising a sensor module 7 mountable at the sealing gasket 5 in a known manner, by means of screws 8 and provided internally with a plurality of transmission elements for monitoring the axle 2 and the bearing, known and not illustrated for simplicity, a connection piece 9 (Figure 3) to be connected to an electronic processing unit of the railway vehicle, well known and not illustrated for simplicity, and a data transmission flexible electric cable 10 connecting in one piece the sensor module 7 with the connection piece 9; here and below, the term "in one piece" means that the three elements 7, 9 and 10 (the screws 8 can also be mounted separately) are mechanically connected in an inseparable manner, without any intermediate connection neither mechanical nor electrical, to form a single complex element.

According to the invention, the housing element 4 has a frontal inlet opening 11 through which the axle 2 with the respective rolling bearing, which is axially blocked on the axle 2 by means of a lid 12, and the sealing gasket 5 are accessible. The housing element 4 is delimited by an annular lateral wall 13 provided with a transversal through hole 14, cylindrical in the illustrated example, radially directed, smaller than the sensor module 7 but larger than the connection piece 9, in other words of smaller transverse dimensions, in this case a smaller diameter, than the transverse dimensions of the sensor module 7 at the electric cable 10, but larger, in the case in point of larger diameter, than the transverse dimensions of the connection piece 9 at the electric cable 10.

Always according to the invention, the sensor unit 6 is also mountable inside the housing element 4 passing through the frontal inlet opening 11 and, by operating according to the direction of the arrow F in Figure 3, passing from the inside towards the outside through the transversal hole 14.

For this purpose, the sensor unit 6 comprises a plug or adapter 15 mounted fitted on a first stretch 16 of the flexible electric cable 10 arranged between the sensor module 7 and the connection piece 9; the plug or adapter 15 is adapted, i.e. is designed, to be inserted in the transversal hole 14 radially from the inside towards the outside, to fluid-tightly plug the transversal hole 14 itself.

In particular, according to the non limiting example illustrated, the plug or adapter 15 of the sensor unit 6 is provided with a stop shoulder 17, in the illustrated example annular and continuous and defined by a radially protruding annular flange; the shoulder or flange 17, with the sensor unit 6 mounted, rests against an inner lateral surface 18 of the lateral wall 13 of the housing 4.

The sensor unit 6 is also provided with removable mechanical blocking means 19 of the plug 15 onto the lateral wall 13 of the housing 4; the removable blocking means 19 are fitted onto, or however free to move astride of, the flexible electric cable 10 to couple with a first end 20 of the plug 15, in use radially protruding from the transversal hole 14 outside of the housing element 4, in the example illustrated so as to sandwich the lateral wall 13 of the housing 4 between the removable blocking means 19 and the stop shoulder 17 of the plug or adapter 15.

The removable blocking means 19 then comprise, in this case (Figure 3) a nut 21 screwed on a threaded stretch 22 of the first end 20 of the plug 15; between the nut 21 and the lateral wall 13 of the housing element 4 a sealing ring 23 is also arranged; the sealing ring 23 and the nut 21 are slidingly fitted onto the flexible electric cable 10 and are larger than the connection piece 9, so as to be fitted on the electric cable 10 on the side of the connection piece 9 and then made to slide up at the plug or adapter 15 after the latter has been introduced into the hole 14.

It is also possible to use other types of fastening means that, in particular, do not require the presence of the stop shoulder 17.

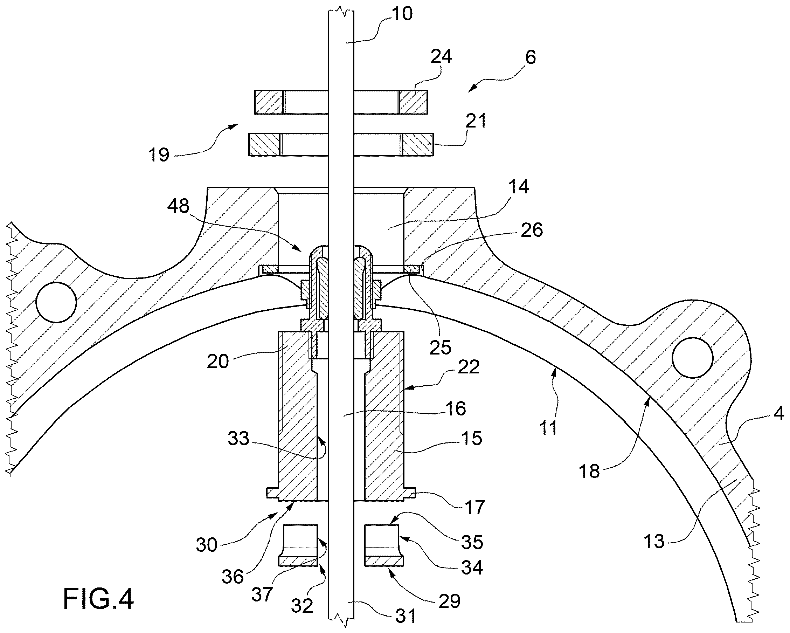

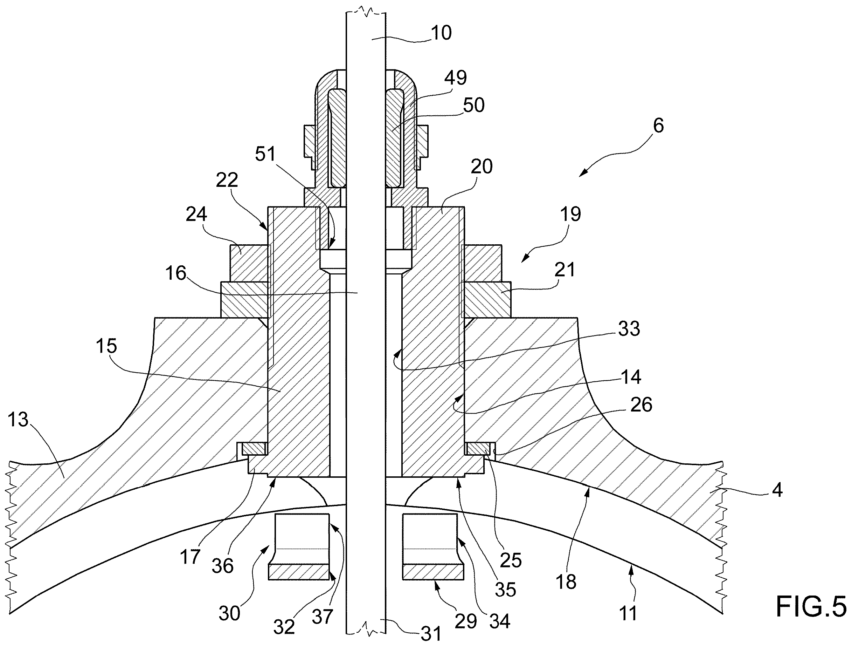

With reference also to Figures 4 and 5, where details similar or identical to those already described are indicated for simplicity with the same reference numbers, the removable blocking means 19 comprise, according to a possible alternative of the invention, a nut 21 and a locknut 24 screwed onto a threaded stretch 22 of the end 20 of the plug 15; in this case, between the inner lateral surface 18 of the lateral wall 13 of the housing element 4 and the stop shoulder 17 a sealing ring 25 is arranged, preferably housed inside an annular seat 26 obtained, for example by mechanical processing, on the lateral wall 13; the stop shoulder 17 is in this case necessarily annular and continuous and the sealing ring 25 and the nut 21 and locknut 24 are slidingly fitted onto the data transmission flexible electric cable 10.

In particular, the sealing ring 25 is fitted onto the cable 10 passing over the connection piece 9 before inserting the same and the cable 10 into the hole 14, being then introduced inside of the housing 4 through the inlet opening 11, along with the sensor module 7 and the plug 15; subsequently the piece 9 and the cable 10 are passed through the hole 14 until the end 20 emerges radially outside the housing element 4 and brings the shoulder 17 onto the lateral wall 13, with the interposition of the sealing ring 25. Finally, the nuts 21 and 24 are slidably inserted on the cable 10 passing over the smaller piece 9 and are screwed onto the threaded stretch 22, thus making the sensor unit 6 integral with the housing element 4 which is part of the railway axle box 3.

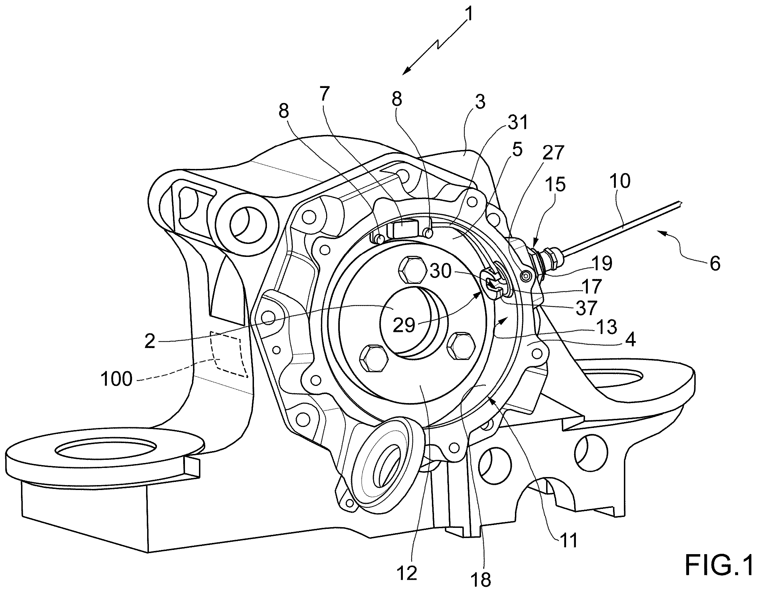

To allow these operations, according to both the described embodiments, the plug or adapter 15 is provided with a lateral seat 26 (Figure 3) which, after introducing the plug 15 into the hole 14, is engaged by a screw 27 (Figure 1) housed inside a hole 28 axially obtained in the annular housing element 4 near the inlet opening 11, so as to prevent the rotation of the plug or adapter 15, which is made as a cylindrical revolution solid having different diameters, inside the hole 14, which is also cylindrical.

The plug or adapter 15 of the sensor unit 6 has a second end 29, opposite to the end 20 and, in the examples illustrated, provided with the stop shoulder 17; the end 29 is arranged in use radially protruding inside the annular housing element 4 and, according to a non-secondary aspect of the invention, is provided with means 30 for guiding and blocking the data transmission flexible electric cable 10 adapted to keep a second stretch 31 of the data transmission flexible electric cable between the plug 15 and the sensor module 7 laterally folded with respect to the plug 15, as clearly illustrated in Figure 1, and adjacent to the inner lateral surface 18 of the lateral wall 13 of the housing element.

In particular, the guiding and blocking means 30 for the flexible electric cable 10 are adapted to allow the folding of its second stretch 31 towards the inner lateral surface 18 and according to a circumferential direction both on the side of a first side of the plug 15, in the example illustrated in Figure 1 to the left, and on the side of a second side of the plug 15, opposite to the first one, therefore to the right, so that the sensor unit 6 is of universal installation, whatever is the fastening position of the sensor module 7.

According to the embodiments of Figures from 1 to 5, having the plug 15 made as a cylindrical revolution solid, the guiding and blocking means 30 consist of a series of slots 32,35,36,37; the slot 32 is frontally obtained on the second end 29 and radially extends starting from an axial through hole 33 (Figures 2, 4 and 5) of the plug 15 engaged to be crossed by the flexible electric cable 10; the slot 32 extends up to interrupt a lateral wall 34 of the second end 29 of the plug 15.

The slots 35,36 are obtained to pass through the lateral wall 34 of the end 29 of the plug 15 and circumferentially extend from the first slot 32 and in opposite directions, each over a stretch of predetermined length; the slots 35,36 are axially staggered with respect to the slot 32 and are connected to the slot 32 by means of a fourth slot 37 obtained to pass through the lateral wall 34 in the axial direction.

In this way, a L-shaped double seat on the lateral wall 34 defined by the two slots 37,35 and 36,36 connected with the axial hole 33 through the radial slot 32 is obtained. It is then possible to fold at right angle the stretch 31 of the electric cable 10 inside the slot 32 to make it come out through one of the slots 35 or 36, at the right or left side of the plug 15; the cable stretch 31 is engaged in a blocked manner both in the slot 35 and in the slot 36, due to the double curve to which is forced by the slots 32 and 37. In this way any risk is avoided of accidental interference of the cable 10 with rotating parts housed in the unit 1.

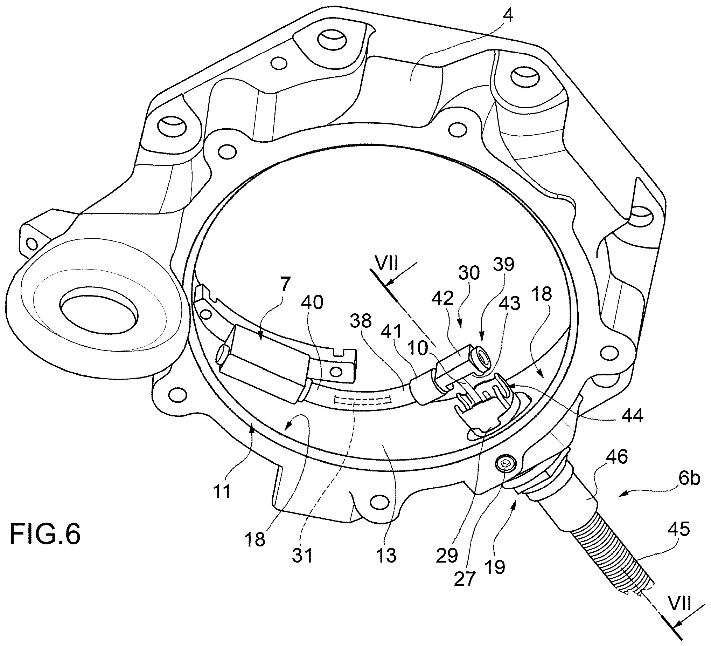

With reference now to Figures 5 and 6, where details similar or identical to those already described are indicated for simplicity with the same reference numbers, it is illustrated the housing element 4 of figures 1 and 3 but provided with a sensor unit 6b that represents a possible alternative of the sensor unit 6 already described.

In particular, in the sensor units 6b the guiding and blocking means 30 for the flexible electric cable 10 consists in a pipe section 38 folded to follow an arc-of-circle and within which the second stretch 31 of the flexible electric cable is inserted, and in a reversible hooking snap device 39; the pipe section 38 has a first end 40 fastened so as to be integral with the sensor module 7, at one side thereof, and a second end 41, opposite to the end 40 and crossed in a through manner by the flexible electric cable 10, the second end 41 being fastened so as to be integral but in a removable manner with the end 29 of the plug or adapter 15 by means of the snap device 39.

The device 39 comprises a male element 42 fastened in a rotary manner to the second end 41 of the pipe section 38 and provided with a lateral slot 43 (Figure 6) for passage of the flexible electric cable 10, and a female element 44 integrated in the second end 29 of the plug 15.

According to this alternative, the sensor unit 6b also comprises a flexible corrugated pipe 45 inside which the data transmission flexible electric cable 10 is fluid-tightly accommodated; the corrugated pipe 45 is fluid-tightly driven into a sleeve element 46 which is in turn crossed in a through manner by the data transmission flexible electric cable 10 and is fluid-tightly connected to, so as to be integral with, the first end 20 of the plug 15, screwed onto, or bayonet-inserted into, a seat 47 obtained in the end 20. The plug 15 is mounted to slide axially and with great radial clearance on the cable 10.

The corrugated pipe 45 is in use connected in known manner to the data processing unit together with the piece 9, ensuring the water tightness of the sensor unit 6b. According to this alternative, the connection piece 9 is sufficiently small to pass inside the corrugated pipe 45. After installing the plug 15 into the hole 14, leaving the male 42 and female 44 elements detached and held together by the electric cable 10, the latter can be folded, placing the pipe section 38 in the desired position, and then snap-couple the elements 42 and 44 thus blocking the stretch 31 of cable 10. In this alternative, the stretch 31 is also protected by the pipe section 38.

According to the alternatives of Figures from 1 to 5, instead, the plug 15 of the sensor unit 6 is fastened so as to be integral and fluid-tight with the first stretch 16 of the data flexible electric cable 10 on which it is fitted and by which it is crossed in a through manner; the first end 20 of the plug 15 is for this purpose provided with a connecting device 48 (Figures 4 and 5) to be connected to the electric cable 10, consisting of a cup-shaped body 49 (Figure 5), crossed in a through manner by the electric cable 10 and accommodating a sleeve-shaped sealing element 50 axially blocked therein and driven into interference fit onto the electric cable 10; the cup-shaped body 49 is screwed onto (or, according to a possible alternative not shown bayonet-inserted into) a seat 51 obtained within the end 20 of the plug 15.

All the purposes of the invention are thus achieved.

## Claims

1. A sensorized axlebox-bearing unit (1) for supporting a railway axle (2), comprising an axle box (3) adapted to pivotally receive the railway axle (2) through a rolling bearing (100) and provided with a housing element (4), stationary in use, which supports a sealing gasket (5) towards the outside of the axle box; and a sensor unit (6; 6b) comprising a sensor module (7) which is mountable at the sealing gasket, and provided with a plurality of transmission elements for monitoring the axle and the bearing (100), a connection piece (9) to be connected to an electronic processing unit and a data transmission flexible electric cable (10) connecting the sensor module (7) in one piece with the connection piece (9); wherein the housing element (4) has a frontal inlet opening (11) through which the axle (2) and the sealing gasket (5) are accessible, and is delimited by an annular lateral wall (13) provided with a transversal through hole (14); **characterized in that**, in combination:
i)- the transversal through hole (14) is smaller than the sensor module (7) but larger than the connection piece (9) ;
ii)- the sensor unit (6; 6b) is mounted inside the housing element (4) after having passed through the frontal inlet opening (11) and then from the inside toward the outside through the transversal hole (14);
iii)- the sensor unit (6; 6b) further comprises a plug or adapter (15) fitted onto a first stretch (16) of the data transmission flexible electric cable arranged between the sensor module and the connection piece and adapted to be inserted into the transversal hole (14) of the lateral wall of the housing element radially from the inside toward the outside, to fluid-tightly plug the transversal hole (14);
iv)- the sensor unit also being provided with removable mechanical blocking means (19) for blocking the plug onto the lateral wall of the housing element; the removable blocking means (19) being movably fitted on the data transmission flexible electric cable (10) to couple with a first end (20) of the plug, radially protruding from the transversal hole toward the outside of the housing element.

2. A sensorized axlebox-bearing unit according to claim 1, **characterized in that** the plug (15) of the sensor unit has a second end (29), opposite to the first one, which second end is arranged inside the housing element (4) and is provided with guiding and blocking means (30) for the data transmission flexible electric cable, which are adapted to keep a second stretch (31) of the data transmission flexible electric cable between the plug (15) and the sensor module (7) laterally folded with respect to the plug and adjacent to an inner lateral surface (18) of the lateral wall of the housing element.

3. A sensorized axlebox-bearing unit according to claim 2, **characterized in that** the guiding and blocking means (30) for the data transmission flexible electric cable are adapted to allow the second stretch (31) thereof to be folded towards the inner lateral surface (18) of the lateral wall of the housing element and, according to a circumferential direction, both on the side of a first side of the plug, and on the side of a second side of the plug, which is opposite to the first.

4. A sensorized axlebox-bearing unit according to claim 2 or 3, **characterized in that** the plug (15) is made as a cylindrical revolution solid, the guiding and blocking means (30) for the data transmission flexible electric cable consisting: of a first slot (32) frontally obtained on the second end (29) of the plug and which radially extends starting from an axial through hole (33) of the plug, which hole is engaged to be crossed by the data transmission flexible electric cable, up to interrupt a lateral wall (34) of the second end of the plug; and of a second (35) and a third (36) slots, which are obtained to pass through the lateral wall (34) of the second end of the plug, which circumferentially extend from the first slot (32) and in opposite direction, over a stretch of predetermined length; the second and third slots (35, 36) being axially staggered with respect to the first slot (32) and being connected to the first slot by means of a fourth slot (37), obtained to pass through the lateral wall (34) of the second end of the plug in the axial direction.

5. A sensorized axlebox-bearing unit according to claims 2 and 3, **characterized in that** the guiding and blocking means (30) for the data transmission flexible electric cable consist: of a pipe section (38) folded to follow an arc-of-circle and within which the second stretch (31) of the data transmission flexible electric cable is inserted, the pipe section (38) having a first end (40) fastened to the sensor module (7) and a second end (41), opposite to the first one and crossed in a through manner by the data transmission flexible electric cable (10); and of means to removably fasten the second end (41) of the pipe section (38) to the second end (29) of the plug (15).

6. A sensorized axlebox-bearing unit according to any one of the preceding claims, **characterized in that** the plug (15) is fastened so as to be integral and fluid-tight with the first stretch (16) of the data transmission flexible electric cable on which it is fitted and by which it is crossed in a through manner; the first end (20) of the plug being provided with a connecting device (48) to be connected to the electric cable, consisting of a cup-shaped body (49), which is crossed in a through manner by the electric cable and which accommodates a sleeve-shaped sealing element (50) axially blocked therein and driven into interference fit onto the electric cable, the cup-shaped body being screwed onto, or bayonet-inserted into, a seat (51) obtained within the first end of the plug.

7. A sensorized axlebox-bearing unit according to any one of the claims from 1 to 5, **characterized in that** the sensor unit (6b) further comprises a flexible corrugated pipe (45) in which the data transmission flexible electric cable (10) is fluid-tightly accommodated; the corrugated pipe being fluid-tightly driven into a sleeve element (46), which is in turn crossed in a through manner by the data transmission flexible electric cable and is fluid-tightly connected to, so as to be integral with, the first end (20) of the plug, screwed onto, or bayonet-inserted into, a seat (47) obtained in the first end (20) of the plug.

8. A sensorized axlebox-bearing unit according to any one of the preceding claims, **characterized in that** the plug (15) of the sensor unit is provided with a stop shoulder (17) borne by a second end (29) of the plug and which, when the sensor unit is mounted, rests against an inner lateral surface (18) of the lateral wall of the housing element; the removable blocking means (19) comprising a nut (21) screwed onto a threaded stretch (22) of the first end of the plug, so as to sandwich the lateral wall (13) of the housing element between the removable blocking means (19) and the stop shoulder (17) of the plug; a sealing ring (23) being arranged between the nut (21) and the lateral wall (13) of the housing element; the sealing ring (23) and the nut (21) being slidingly fitted onto the data transmission flexible electric cable (10).

9. A sensorized axlebox-bearing unit according to any one of the claims from 1 to 7, **characterized in that** the plug (15) of the sensor unit is provided with a stop shoulder (17) borne by a second end (29) of the plug and which, when the sensor unit is mounted, rests against an inner lateral surface (18) of the lateral wall of the housing element; the removable blocking means (19) comprising a nut (21) and a locknut (24), which are screwed onto a threaded stretch (22) of the first end of the plug; a sealing ring (25) being arranged between the inner lateral surface (18) of the lateral wall of the housing element and the stop shoulder (17), preferably inside an annular seat (26) obtained in the lateral wall of the housing element; the stop shoulder (17) being annular and continuous and the sealing ring (25) and the nut (21) and the locknut (24) being slidingly fitted onto the data transmission flexible electric cable (10).

## Patentansprüche

1. Mit Sensoren bestückte Radsatzlagereinheit (1) zum Tragen einer Eisenbahnachse (2), die ein Radsatzlager (3) umfasst, das ausgelegt ist, die Eisenbahnachse (2) durch ein Walzlager (100) drehbar aufzunehmen, und mit einem Gehäuseelement (4), das im Betrieb ortsfest ist, versehen ist, das eine Dichtung (5) zur Außenseite des Radsatzlagers trägt; und eine Sensoreinheit (6; 6b), die ein Sensormodul (7), das bei der Dichtung montierbar ist und mit mehreren Übertragungselementen zum Überwachen der Achse und des Lagers (100) versehen ist, ein Verbindungsstück (9), das mit einer elektronischen Verarbeitungseinheit verbunden werden soll, und ein flexibles elektrisches Datenübertragungskabel (10), das das Sensormodul (7) in einem Stück mit dem Verbindungsstück (9) verbindet, umfasst; wobei das Gehäuseelement (4) eine frontale Einlassöffnung (11) besitzt, durch die die Achse (2) und die Dichtung (5) zugänglich sind, und durch eine ringförmige seitliche Wand (13), die mit einem transversale Durchgangsloch (14) versehen ist, begrenzt ist; **dadurch gekennzeichnet, dass** in Kombination
i) das transversale Durchgangsloch (14) kleiner als das Sensormodul (7), jedoch größer als das Verbindungsstück (9) ist;
ii) die Sensoreinheit (6; 6b) im Gehäuseelement (4) befestigt ist, nachdem sie durch die frontale Einlassöffnung (11) und dann von innen nach außen durch das transversale Durchgangsloch (14) verlaufen ist;
iii) die Sensoreinheit (6; 6b) ferner einen Stopfen oder Adapter (15) umfasst, der an einem ersten Stück (16) des flexiblen elektrischen Datenübertragungskabels, das zwischen dem Sensormodul und dem Verbindungsstück angeordnet ist, angebracht ist und ausgelegt ist, in das transversale Durchgangsloch (14) der seitlichen Wand des Gehäuseelements radial von innen nach außen eingesetzt zu sein, um das transversale Durchgangsloch (14) fluiddicht abzudichten; und
iv) die Sensoreinheit auch mit einem abnehmbaren mechanischen Sperrmittel (19) zum Versperren des Stopfens an der seitlichen Wand des Gehäuseelements versehen ist; wobei das abnehmbare Sperrmittel (19) an dem flexiblen elektrischen Datenübertragungskabel (10) beweglich angebracht ist, um an ein erstes Ende (20) des Stopfens, das aus dem transversalen Durchgangsloch zur Außenseite des Gehäuseelements radial vorsteht, zu koppeln.

2. Mit Sensoren bestückte Radsatzlagereinheit nach Anspruch 1, **dadurch gekennzeichnet, dass** der Stopfen (15) der Sensoreinheit ein zweites Ende (29) gegenüber dem ersten besitzt, wobei das zweite Ende im Gehäuseelement (4) angeordnet ist und mit Führungs- und Sperrmitteln (30) für das flexible elektrische Datenübertragungskabel versehen ist, die ausgelegt sind, ein zweites Stück (31) des flexiblen elektrischen Datenübertragungskabels zwischen dem Stopfen (15) und dem Sensormodul (7) in Bezug auf den Stopfen und in der Nähe einer inneren Seitenfläche (18) der seitlichen Wand des Gehäuseelements seitlich gebogen zu halten.

3. Mit Sensoren bestückte Radsatzlagereinheit nach Anspruch 2, **dadurch gekennzeichnet, dass** die Führungs- und Sperrmittel (30) für das flexible elektrische Datenübertragungskabel ausgelegt sind, zu ermöglichen, dass das zweite Stück (31) davon zur inneren Seitenfläche (18) der seitlichen Wand des Gehäuseelements und in Übereinstimmung mit einer Umfangsrichtung sowohl auf der Seite einer ersten Seite des Stopfens als auch auf der Seite einer zweiten Seite des Stopfens, die gegenüber der ersten liegt, gebogen ist.

4. Mit Sensoren bestückte Radsatzlagereinheit nach Anspruch 2 oder 3, **dadurch gekennzeichnet, dass** der Stopfen (15) als ein zylindrischer, rotationssymmetrischer Körper gestaltet ist, wobei die Führungs- und Sperrmittel (30) für das flexible elektrische Datenübertragungskabel aus Folgendem bestehen: einem ersten Schlitz (32), der am zweiten Ende (29) des Stopfens frontal erhalten wird und ausgehend von einem axialen Durchgangsloch (33) des Stopfens, wobei das Loch derart eingestellt ist, dass es von dem flexiblen elektrische Datenübertragungskabel durchquert werden kann, bis zum Unterbrechen einer seitlichen Wand (34) des zweiten Endes des Stopfens radial verläuft; und einem zweiten (35) und einem dritten (36) Schlitz, die derart erhalten werden, dass sie die seitliche Wand (34) des zweiten Endes des Stopfens durchlaufen, und die vom ersten Schlitz (32) und in entgegengesetzter Richtung über ein Stück einer vorgegebenen Länge umlaufend verlaufen; wobei der zweite und der dritte Schlitz (35, 36) in Bezug auf den ersten Schlitz (32) axial gestaffelt sind und mit dem ersten Schlitz mittels eines vierten Schlitzes (37), der derart erhalten wird, dass er die seitliche Wand (34) des zweiten Endes des Stopfens in der axialen Richtung durchläuft, verbunden sind.

5. Mit Sensoren bestückte Radsatzlagereinheit nach einem der Ansprüche 2 und 3, **dadurch gekennzeichnet, dass** die Führungs- und Sperrmittel (30) für das flexible elektrische Datenübertragungskabel aus Folgendem bestehen: einem Leitungsabschnitt (38), der derart gebogen ist, dass er einem Kreisbogen folgt, und in den das zweite Stück (31) des flexiblen elektrischen Datenübertragungskabels eingesetzt ist, wobei der Leitungsabschnitt (38) ein erstes Ende (40), das am Sensormodul (7) befestigt ist, und ein zweites Ende (41) gegenüber dem ersten Ende, das in einer durchgehenden Weise von dem flexiblen elektrischen Datenübertragungskabel (10) durchquert wird, besitzt; und Mitteln, um das zweite Ende (41) des Leitungsabschnitts (38) am zweiten Ende (29) des Stopfens (15) abnehmbar zu befestigen.

6. Mit Sensoren bestückte Radsatzlagereinheit nach einem der vorhergehenden Ansprüche, **dadurch gekennzeichnet, dass** der Stopfen (15) derart befestigt ist, dass er mit dem ersten Stück (16) des flexiblen elektrischen Datenübertragungskabels, an dem er angebracht ist und von dem er in einer durchgehenden Weise durchquert wird, einteilig und fluiddicht ist; wobei das erste Ende (20) des Stopfens mit einer Verbindungsvorrichtung (48), die mit dem elektrischen Kabel verbunden werden soll, versehen ist, die aus einem becherförmigen Körper (49), der in einer durchgehenden Weise von dem elektrische Kabel durchquert wird, besteht und die ein hülsenförmiges Dichtungselement (50), das darin axial blockiert ist, und in eingreifenden Sitz am elektrischen Kabel getrieben ist, aufnimmt, wobei der becherförmige Körper auf eine Aufnahme (51), die im ersten Ende des Stopfens erhalten wird, geschraubt oder in sie durch einen Bajonettverschluss eingesetzt ist.

7. Mit Sensoren bestückte Radsatzlagereinheit nach einem der Ansprüche 1 bis 5, **dadurch gekennzeichnet, dass** die Sensoreinheit (6b) ferner eine flexible gewellte Leitung (45) umfasst, in die das flexible elektrische Datenübertragungskabel (10) fluiddicht aufgenommen ist; wobei die gewellte Leitung fluiddicht in ein Hülsenelement (46) getrieben ist, das wiederum in einer durchgehenden Weise von dem flexiblen elektrischen Datenübertragungskabel durchquert wird und derart, dass es mit ihm einteilig ist, mit dem ersten Ende (20) des Stopfens, der auf eine Aufnahme (47), die im ersten Ende des Stopfens erhalten wird, geschraubt oder in sie durch einen Bajonettverschluss eingesetzt ist, fluiddicht verbunden ist.

8. Mit Sensoren bestückte Radsatzlagereinheit nach einem der vorhergehenden Ansprüche, **dadurch gekennzeichnet, dass** der Stopfen (15) der Sensoreinheit mit einer Stoppschulter (17) versehen ist, die durch ein zweites Ende (29) des Stopfens getragen wird und die, wenn die Sensoreinheit montiert ist, an einer inneren Seitenfläche (18) der seitlichen Wand des Gehäuseelements anliegt; wobei das abnehmbare Sperrmittel (19) eine Mutter (21) umfasst, die auf ein mit einem Gewinde versehenes Stück (22) des ersten Endes des Stopfens geschraubt ist, um die seitliche Wand (13) des Gehäuseelements zwischen dem abnehmbaren Sperrmittel (19) und der Stoppschulter (17) des Stopfens einzuklemmen; ein Dichtungsring (23) zwischen der Mutter (21) und der seitlichen Wand (13) des Gehäuseelements angeordnet ist und der Dichtungsring (23) und die Mutter (21) an dem flexiblen elektrischen Datenübertragungskabel (10) gleitend angebracht sind.

9. Mit Sensoren bestückte Radsatzlagereinheit nach einem der Ansprüche 1 bis 7, **dadurch gekennzeichnet, dass** der Stopfen (15) der Sensoreinheit mit einer Stoppschulter (17) versehen ist, die durch ein zweites Ende (29) des Stopfens getragen wird und die, wenn die Sensoreinheit montiert ist, an einer inneren Seitenfläche (18) der seitlichen Wand des Gehäuseelements anliegt; wobei das abnehmbare Sperrmittel (19) eine Mutter (21) und eine Kontermutter (24) umfasst, die auf ein mit einem Gewinde versehenes Stück (22) des ersten Endes des Stopfens geschraubt sind; ein Dichtungsring zwischen der inneren Seitenfläche (18) der seitlichen Wand des Gehäuseelements und der Stoppschulter (17), bevorzugt in einer ringförmigen Aufnahme (26), die in der seitlichen Wand des Gehäuseelements erhalten wird, angeordnet ist; die Stoppschulter (17) ringförmig und kontinuierlich ist und der Dichtungsring (25), die Mutter (21) und die Kontermutter (24) an dem flexiblen elektrischen Datenübertragungskabel (10) gleitend angebracht sind.

## Revendications

1. Ensemble (1) boîte d'essieu-palier muni d'un capteur, destiné à porter un essieu ferroviaire (2), comprenant une boîte d'essieu (3) adaptée à recevoir à pivotement l'essieu ferroviaire (2) à travers un palier à roulement (100) et pourvue d'un élément carter (4), immobile en service, qui porte une garniture d'étanchéité (5) vers l'extérieur de la boîte d'essieu ; et une unité capteur (6 ; 6b) comprenant un module capteur (7) susceptible d'être monté au niveau de la garniture d'étanchéité, et pourvue d'une pluralité d'éléments de transmission pour la surveillance de l'essieu et du palier (100), d'une pièce raccord (9) destinée à être raccordée à une unité de traitement électronique et d'un câble électrique souple de transmission de données (10) raccordant d'un seul tenant le module capteur (7) à la pièce raccord (9) ; l'élément carter (4) possédant une ouverture d'entrée frontale (11) par laquelle l'essieu (2) et la garniture d'étanchéité (5) sont accessibles, et étant délimité par une paroi latérale annulaire (13) pourvue d'un trou traversant transversal (14) ; **caractérisé en ce que**, en combinaison :
i)- le trou traversant transversal (14) est plus petit que le module capteur (7) mais plus grand que la pièce raccord (9) ;
ii)- l'unité capteur (6 ; 6b) est montée à l'intérieur de l'élément capteur (4) après être passée par l'ouverture d'entrée frontale (11) puis, de l'intérieur vers l'extérieur, par le trou transversal (14) ;
iii)- l'unité capteur (6 ; 6b) comprend en outre un bouchon ou adaptateur (15) s'ajustant sur une première étendue (16) du câble électrique souple de transmission de données agencée entre le module capteur et la pièce raccord et adapté à être introduit dans le trou transversal (14) de la paroi latérale de l'élément carter radialement de l'intérieur vers l'extérieur, pour boucher de manière étanche aux fluides le trou transversal (14) ;
iv)- l'unité capteur étant également pourvue d'un moyen de blocage mécanique amovible (19) destiné à bloquer le bouchon sur la paroi latérale de l'élément carter ; le moyen de blocage amovible (19) s'ajustant mobile sur le câble électrique souple de transmission de données (10) pour s'accoupler à une première extrémité (20) du bouchon, faisant saillie radialement du trou transversal vers l'extérieur de l'élément carter.

2. Ensemble boîte d'essieu-palier muni d'un capteur selon la revendication 1, **caractérisé en ce que** le bouchon (15) de l'unité capteur possède une deuxième extrémité (29), opposée à la première, laquelle deuxième extrémité est agencée à l'intérieur de l'élément carter (4) et est pourvue de moyens de guidage et de blocage (30) pour le câble électrique souple de transmission de données, lesquels sont adaptés à maintenir une deuxième étendue (31) du câble électrique souple de transmission de données entre le bouchon (15) et le module capteur (7) latéralement pliée par rapport au bouchon et adjacente à une surface latérale intérieure (18) de la paroi latérale de l'élément carter.

3. Ensemble boîte d'essieu-palier muni d'un capteur selon la revendication 2, **caractérisé en ce que** les moyens de guidage et de blocage (30) pour le câble électrique souple de transmission de données sont adaptés à permettre le pliage de sa deuxième étendue (31) vers la surface latérale intérieure (18) de la paroi latérale de l'élément carter et, selon une direction circonférentielle, à la fois sur le côté d'un première côté du bouchon et sur le côté d'un deuxième côté du bouchon, qui est opposé au premier.

4. Ensemble boîte d'essieu-palier muni d'un capteur selon la revendication 2 ou 3, **caractérisé en ce que** le bouchon (15) prend la forme d'un solide de révolution cylindrique, les moyens de guidage et de blocage (30) pour le câble électrique souple de transmission de données se composant : d'une première encoche (32) ménagée frontalement sur la deuxième extrémité (29) du bouchon et s'étendant radialement en partant d'un trou traversant axial (33) du bouchon, lequel trou est engagé pour être traversé par le câble électrique souple de transmission de données, jusqu'à interrompre une paroi latérale (34) de la deuxième extrémité du bouchon ; et d'une deuxième (35) et d'une troisième (36) encoche, lesquelles sont ménagées pour passer à travers la paroi latérale (34) de la deuxième extrémité du bouchon, lesquelles s'étendent circonférentiellement depuis la première encoche (32) et dans une direction opposée, sur une étendue de longueur prédéterminée ; les deuxième et troisième encoches (35, 36) étant axialement décalées par rapport à la première encoche (32) et étant reliées à la première encoche au moyen d'une quatrième encoche (37), ménagée pour passer à travers la paroi latérale (34) de la deuxième extrémité du bouchon dans la direction axiale.

5. Ensemble boîte d'essieu-palier muni d'un capteur selon les revendications 2 et 3, **caractérisé en ce que** les moyens de guidage et de blocage (30) pour le câble électrique souple de transmission de données se composent : d'un tronçon (38) de tuyau plié pour suivre un arc de cercle et à l'intérieur duquel est introduite la deuxième étendue (31) du câble électrique souple de transmission de données, le tronçon (38) de tuyau possédant une première extrémité (40) attachée au module capteur (7) et une deuxième extrémité (41), opposée à la première et traversée de manière traversante par le câble électrique souple de transmission de données (10) ; et de moyens d'attache amovible de la deuxième extrémité (41) du tronçon (38) de tuyau à la deuxième extrémité (29) du bouchon (15).

6. Ensemble boîte d'essieu-palier muni d'un capteur selon l'une quelconque des revendications précédentes, **caractérisé en ce que** le bouchon (15) est attaché de manière à faire partie intégrante de la première étendue (16) du câble électrique souple de transmission de données sur laquelle il s'ajuste et à être étanche aux fluides avec elle ; la première extrémité (20) du bouchon étant pourvue d'un dispositif de raccordement (48) destiné à être raccordé au câble électrique, se composant d'un corps en forme de godet (49), qui est traversé de manière traversante par le câble électrique et qui accueille un élément d'étanchéité en forme de manchon (50) qui y est bloqué axialement et emmanché en ajustement serré sur le câble électrique, le corps en forme de godet étant vissé sur un siège (51) ménagé à l'intérieur de la première extrémité du bouchon ou emboîté par baïonnette dans celui-ci.

7. Ensemble boîte d'essieu-palier muni d'un capteur selon l'une quelconque des revendications 1 à 5, **caractérisé en ce que** l'unité capteur (6b) comprend en outre un tuyau souple ondulé (45) dans lequel se loge le câble électrique souple de transmission de données (10) de manière étanche aux fluides ; le tuyau ondulé étant emmanché de manière étanche aux fluides dans un élément manchon (46), lequel est à son tour traversé de manière traversante par le câble électrique souple de transmission de données et est raccordé de manière étanche aux fluides à la première extrémité (20) du bouchon, de façon à faire partie intégrante de celle-ci, vissé sur un siège (47) ménagé dans la première extrémité (20) du bouchon ou emboîté par baïonnette dans celui-ci.

8. Ensemble boîte d'essieu-palier muni d'un capteur selon l'une quelconque des revendications précédentes, **caractérisé en ce que** le bouchon (15) de l'unité capteur est pourvu d'un épaulement de butée (17) porté par une deuxième extrémité (29) du bouchon et qui, une fois l'unité capteur montée, repose contre une surface latérale intérieure (18) de la paroi latérale de l'élément carter ; le moyen de blocage amovible (19) comprenant un écrou (21) vissé sur une étendue filetée (22) de la première extrémité du bouchon, de manière à prendre en sandwich la paroi latérale (13) de l'élément carter entre le moyen de blocage amovible (19) et l'épaulement de butée (17) du bouchon ; un anneau d'étanchéité (23) étant agencé entre l'écrou (21) et la paroi latérale (13) de l'élément carter ; l'anneau d'étanchéité (23) et l'écrou (21) étant montés à coulissement sur le câble électrique souple de transmission de données (10).

9. Ensemble boîte d'essieu-palier muni d'un capteur selon l'une quelconque des revendications 1 à 7, **caractérisé en ce que** le bouchon (15) de l'unité capteur est pourvu d'un épaulement de butée (17) porté par une deuxième extrémité (29) du bouchon et qui, une fois l'unité capteur montée, repose contre une surface latérale intérieure (18) de la paroi latérale de l'élément carter ; le moyen de blocage amovible (19) comprenant un écrou (21) et un contre-écrou (24), lesquels sont vissés sur une étendue filetée (22) de la première extrémité du bouchon ; un anneau d'étanchéité (25) étant agencé entre la surface latérale intérieure (18) de la paroi latérale de l'élément carter et l'épaulement de butée (17), de préférence à l'intérieur d'un siège annulaire (26) ménagé dans la paroi latérale de l'élément carter ; l'épaulement de butée (17) étant annulaire et continu et l'anneau d'étanchéité (23) et l'écrou (21) et le contre-écrou (24) étant montés à coulissement sur le câble électrique souple de transmission de données (10).
